# EUROPÄISCHE PATENTSCHRIFT

(11) **EP 1 284 203 B1**
(45) Veröffentlichungstag und Bekanntmachung des Hinweises auf die Patenterteilung: **22.06.2005**
(21) Anmeldenummer: 02012576.1
(22) Anmeldetag: 06.06.2002
(51) Int. Cl.: B60C 9/22, B60C 9/18

(54) **Fahrzeugluftreifen mit einer Gürtelbandage**
Tire with a belt bandage
Bandage pour une ceinture pneumatique

(30) Priorität: 07.08.2001 DE 10138670
(43) Veröffentlichungstag der Anmeldung: 19.02.2003
(73) Patentinhaber: Continental Aktiengesellschaft, 30165 Hannover (DE)
(72) Erfinder: Drews, Marko, 30173 Hannover (DE); Fenck, Michael, 85092 Kösching (DE); Roppitsch, Wolfgang, 30539 Hannover (DE)

(56) Entgegenhaltungen:
- EP-B- 0 332 449
- EP-B- 0 511 797
- EP-B- 0 573 237
- DE-A- 4 209 818
- US-A- 4 934 428
- US-A- 4 962 802
- US-A- 5 271 445

## Beschreibung

Die Erfindung betrifft einen Fahrzeugluftreifen mit einem Laufstreifen, einer Radialkarkasse, die sich vom Scheitelbereich über zwei Seitenwandteile nach radial innen erstreckt und in Wülsten verankert ist, und einem Gürtel aus wenigstens zwei Cordlagen, welcher zwischen dem Laufstreifen und dem Scheitelbereich der Radialkarkasse eingebettet ist und mit einer den Gürtel verstärkenden, im wesentlichen in Umfangsrichtung des Fahrzeugluftreifens verlaufenden Bandage, welche zumindest teilweise aus in Gummi eingebetteten metallischen Drähten besteht, welche über dem Gürtel angeordnet sind und zumindest vor der Vulkanisation des Fahrzeugluftreifens jeweils einen wellenförmigen Verlauf aufweisen.

Es ist bekannt, dass zur Verbesserung des Widerstandes gegen Laufflächenabnutzung, zum Gegenhalten der Fliehkräfte bei hohen Geschwindigkeiten und zum Vermeiden von Trennungen der Ränder der Cordlagen des Gürtels diese durch eine Bandage fest einzubinden sind. Durch eine solche Bandage werden die Reifeneigenschaften in Bezug auf geringen Rollwiderstand, höheren Komfort und hohe Hochgeschwindigkeitseignung verbessert. Üblicherweise bestehen die Bandagen dabei aus wärmeschrumpffähigen textilen Materialien, welche sich beim Vulkanisieren des Reifens in ihrer Längenausdehnung verkürzen und somit den Gürtel fest bandagieren. Eine derartige Bandage ist beispielsweise aus der DE 42 09 818 A1 bekannt.

Reifen, welche in Bezug auf Hochgeschwindigkeitstauglichkeit, Pannen- und Notlauffähigkeit, Aufnahme von hohen Traglasten und anderen extremen Anforderungen gerecht werden müssen, können auch mit Bandagen versehen sein, welche aus Stahldrähten bestehen. Derartige Bandagen sind beispielsweise aus der AT 362 245 B und der DE 36 06 934 A1 bekannt. Vorteilhaft an diesen Bandagen aus Stahldrähten ist, dass sie den kritischen Kantenbereich der Cordlagen des Gürtels fester, sicherer und dauerhafter bandagieren können als Bandagen aus organischem Material und geringere Materialkosten haben. Äußerst problematisch bei Bandagen aus Stahldrähten ist allerdings, dass die Herstellung eines Reifens mit einer derartigen Bandage sehr schwierig ist. Denn bei der Konfektionierung von Reifen werden auf die auf einer Reifenaufbautrommel aufgespannte Karkasse die Gürtellagen, die Bandage und der Laufstreifen aufgelegt oder aufgespult, anschließend wird der Reifenrohling bombiert, also in seine Torusform gebracht und schließlich vulkanisiert. Der Reifen wird dabei ungleichmäßig gedehnt, wobei er im Randbereich etwa um 0,1 bis 2% und im Zenit etwa um 5 gedehnt oder gestreckt wird. Wärmeschrumpffähige Materialien erlauben einen derartigen Prozess, dass sie sich ja erst bei der Vulkanisation und der Wärmeeinwirkung auf ihre gewünschte Länge verkürzen und damit gespannt werden. Die textilen Festikeitsträger können während des Reifenaufbaus also relativ locker auf den Gürtel aufgelegt oder aufgespult werden und ergeben beim anschließenden Bombieren und Vulkanisieren keine Probleme.

Dies ist bei Stahldrähten nicht der Fall. Das Bombieren und Vulkanisieren ist bei Bandagen aus Stahldrähten äußerst problematisch, da diese in der Regel nicht in der Lage sind, insbesondere im Zenitbereich des Reifens die Dehnung mitzumachen. Hier kann es dann zu Einschnürungen und Geometrieveränderungen kommen, die unerwünscht sind. Das Problem hat man bislang auf unterschiedliche Weisen zu lösen versucht. So wird in der DE 36 06 934 A1 vorgeschlagen, den Abstand von einzelnen Stahldrähten zueinander über die Breite der Bandage zu variieren, wobei im Zenit- oder Mittenbereich der Bandage die Stahldrähte den weitesten Abstand zueinander aufweisen, während im Kantenbereich der Bandage die Stahldrähte einen geringen Abstand zueinander aufweisen. In der AT 362 245 B wird das Problem dadurch zu lösen versucht, dass die Stahldrähte im Mittenbereich einen geringeren Durchmesser aufweisen als im Kantenbereich. Anders formuliert wird also hier versucht, unterschiedliche Erhebungen im Kantenbereich und im Zenitbereich durch unterschiedlich dicke Stahldrähte zu kompensieren.

In der DE 31 08 140 C2 ist einen Kantenbandage, also eine Bandage, bei der lediglich die Kanten des Gürtels abgedeckt sind, beschrieben, bei der unter anderem die Möglichkeit erwähnt ist, die Festigkeitsträger der Bandage, bei denen es sich auch um Stahldrähte handeln kann, in Wellenform auf die Gürtelkanten aufzulegen. Die Drähte sind also nicht wie sonst üblich gerade, sondern weisen Wellen mit Amplituden auf. Gemäß der Lehre DE 31 08 140 C2 soll hierdurch erreicht werden, dass die Festigkeitsträger bei Geschwindigkeiten bis ca. 120 km/h um 0,3 bis 3% dehnbar und bei Geschwindigkeiten über 120 km/h undehnbar sind. Hier soll also die Dehnbarkeit der Bandage im Fahrbetrieb bei unterschiedlichen Geschwindigkeiten variiert werden können. Das Problem des Dehnungsverhaltens beim Reifenaufbau bzw. beim Bombieren wird in der DE 31 08 140 C2 nicht erwähnt, spielt dort auch praktisch keine Rolle, das diese Bandage nur den Kantenbereich des Gürtels abdeckt, wo nur eine sehr geringe Erhebung und Dehnung während des Bombierens stattfindet.

Gewellte Stahldrähte zur Verstärkung eines Reifens sind an sich bekannt, nämlich durch die DE-AS 1 043 843. Dort ist eine ringförmige Einlage für Luftreifen beschrieben worden, bei welcher es sich um den eigentlichen Gürtel handelt, welcher aus gewellten Drähten besteht, die nach der Fertigstellung des Reifens noch eine Restwellung besitzen sollen, um den Reifen eine erhöhte Elastizität zu verleihen. Im Gegensatz zu ihren oben beschriebenen Dokumenten soll hier der Reifen also besonders elastisch sein.

Aus der EP 0 573 237 B1 ist ein radialer Luftreifen für Baufahrzeuge bekannt, bei dem zwei herkömmliche Gürtellagen sandwichartig zwischen zwei Lagen angeordnet sind, wobei die den Gürtel bedeckenden Lagen aus gewellten Stahlkorden bestehen.

Der Erfindung liegt die Aufgabe zugrunde, einen Fahrzeugluftreifen der eingangs geschilderten Art zu schaffen, der die geschilderten Probleme vermeidet bzw. ausräumt und welcher im Fahrbetrieb gegenüber bislang bekannten Reifen verbesserte Eigenschaften insbesondere im Hinblick auf eine günstige Veränderung der dynamischen Kontur im Hochgeschwindigkeitsbereich aufweist.

Diese Aufgabe wird mit einem Fahrzeugluftreifen der eingangs geschilderten Art gelöst, welcher die Merkmale des Patentanspruchs 1 oder des Patentanspruchs 2 aufweist.

Erfindungsgemäß ist bei einer Lösung gemäß Patentanspruch 1 vorgesehen, dass die Bandage den Gürtel vollständig abdeckt und dass die Drähte der Bandage vor der Vulkanisation in einem Mittenbereich und einem Zwischenkantenbereich und Mittenbereich liegenden Zwischenbereich unterschiedliche Wellen-Amplituden aufweisen, wobei die Wellenamplitude im Mittenbereich größer als die Wellen-Amplitude im Zwischenbereich und wobei die Wellen-Amplitude im Kantenbereich kleiner ist als die Wellen-Amplitude im Zwischenbereich.

Hier werden also gewellte Drähte eingesetzt, die unterschiedliche Wellen-Amplituden aufweisen. Hierdurch wird erreicht, dass beim Bombieren, das heißt beim Dehnen des Reifenrohlings, sich die Festigkeitsträger der Bandage strecken und der Umfangsvergrößerung des Reifens folgen können. Die Drähte erfahren hierdurch eine Änderungen der Wellen-Amplitude, d.h., die ursprüngliche Welligkeit der Drähte verändert sich in Richtung eines geraden Drahtes. Je nach Ausgangs-Wellen-Amplitude lassen sich hierbei unterschiedliche Rest-Welligkeiten einstellen, je nach gewünschten Eigenschaften des fertigen Reifens.

Diese Art der Vollbandage, d.h. der Bandage, die den gesamten Gürtel abdeckt, ist äußerst vorteilhaft, wobei als besonderer Vorteil zu nennen ist, dass sich eine derartige Bandage vorteilhaft auf das Abnutzungsbild des Reifens auswirkt, da durch eine derartige Bandage ein besseres Abnutzungsbild als bei einer reinen Kantenbandage ergibt, da Stahl als Bandagenmaterial auch bei unterschiedlichen Temperaturen konstante Eigenschaften beibehält und sich im Vergleich zu beispielsweise Nylon weniger dehnt. Auch daher ist der Bandagenverband insgesamt fester und erlaubt nur eine geringe Verformung, was zu einem geringeren Abrieb führt, denn der stabilere Unterbau läßt nur eine geringe Klotzverformung zu.

Ferner gewährleistet eine derartige Bandage eine gleichmäßigere dynamische Konturveränderung des Reifens im Fahrbetrieb. Hierunter ist zu verstehen, dass der Reifen bei verschiedenen Geschwindigkeiten seine Kontur verändert. Bei einer derartigen vollflächigen Bandage erreicht man insbesondere bei Hochgeschwindigkeitsreifen einen positiven Effekt auf die Konturveränderung, d.h. eine gleichmäßigere Konturveränderung.

Besonders positiv wirkt sich eine derartige Bandage auf das sogenannte Flat-Spotting aus. Hierunter versteht man ein Abplatten oder Abflachen des Reifens beim längeren Stand eines Fahrzeugs, insbesondere nach einer vorhergehenden Erwärmung des Reifens. Derartige Abflachungen waren bislang nur schwer in den Griff zu kriegen und wirken sich nachteilig auf die Rundlaufeigenschaften des Reifens aus.

Die Erfindung läßt sich sowohl bei leichten PKW-Reifen, als auch bei LKW-Reifen, Reifen für Geländefahrzeuge und für Motorradreifen einsetzen.

Nach Patentanspruch 2 wird die Aufgabe erfindungsgemäß dadurch gelöst, dass die Bandage aus zwei Lagen besteht, wobei wenigstens eine Lage den Gürtel vollständig überdeckt und wobei wenigstens eine Lage aus in Gummi eingebetteten metallischen Drähten besteht, welche zumindest vor der Vulkanisation des Fahrzeugluftreifens jeweils einen wellenförmigen Verlauf aufweisen. Es hat sich nämlich herausgestellt, dass bei besonders extrem hohen Belastungen von Spezialreifen, insbesondere Hochgeschwindigkeitsreifen oder notlaufgeeigneten Reifen, eine zweite, auf der ersten Bandage aufliegenden Bandage noch besser sichern kann als mit nur einer Lage der Abdeckbandage. Die zweite Lage muss dabei den Gürtel nicht vollständig überdecken, sondern es kann ausreichen, wenn die zweite Lage nur jeweils den Kantenbereich des Gürtels überdeckt und bandagiert.

Der Grundgedanke auch bei dieser alternativen Lösung ist die Verwendung von gewellten Drähten zumindest in einem Teilbereich der Bandage, wobei sie sich zur Erzielung besonderer Effekte mit textilen Bandagenmaterialien, die ebenfalls gewellt sein können, kombinieren läßt.

Hierbei sind eine Vielzahl von Gestaltungsmöglichkeiten und Kombinationen der Materialien und Anordnungen der Lagen über dem Gürtel denkbar. Beispielsweise kann, was gemäß einer weiteren vorteilhaften Ausgestaltung der Erfindung vorgesehen ist, die eine Lage der Bandage aus organischen Festigkeitsträgern, wie Corden aus Aramid, Rayon, Polyester oder Nylon oder deren Mischungen bestehen, wobei sie, was gemäß einer weiteren vorteilhaften Ausgestaltung der Erfindung vorgesehen ist, aus 1-Fach-Gewebe, insbesondere 1400/1-110 epdm (ends per decimeter) besteht.

Bei der geometrischen Anordnung der beiden Lagen der Bandage kann vorgesehen sein, dass eine Lage jeweils nur den Kantenbereich des Gürtels überdeckt, während die andere Lage den Gürtel vollständig überdeckt, oder es kann vorgesehen sein, dass beide Lagen der Bandage den Gürtel vollständig überdecken. Hierbei kann dann jeweils vorgesehen sein, dass entweder die Lage aus organischen Festigkeitsträgern, oder die Lage aus Stahldrähten direkt auf den Gürtel aufliegen bzw. die andere Lage überdecken.

Bezüglich der Lage aus organischen Festigkeitsträgern kann weiter vorgesehen sein, dass diese eine textile Vollbandage oder eine textile Spulbandage ist.

Die Kombination von Bandagenlagen aus Stahl und textilen Festigkeitsträgern erbringen besondere Vorteile im Vergleich zu einer Verwendung eines einzelnen Bandagenmaterials. Diese Vorteile beziehen sich insbesondere auf Hochgeschwindigkeitstauglichkeit, das bereits erwähnte Flat-Spotting, Abrieb und Lebensdauer. Auch für den Fall des Pannenlaufs, wenn also der Reifen drucklos ist, kann eine derartige Kombination Vorteile bringen.

Gemäß praktischen Ausgestaltungen der Erfindung ist vorgesehen, dass die Drähte der Bandage vor dem Auflegen auf den Gürtel in wenigstens einen Streifen aus elastomerem Material eingebettet sind, wobei ferner vorgesehen sein kann, dass ein Streifen jeweils wenigstens zwei Drähte jeweils des Kantenbereichs, des Zwischenbereichs, oder des Mittelbereichs enthält, wobei des Weiteren vorgesehen sein kann, dass die Drähte jeweils Einzeldrähte aus Stahl mit gleichem Durchmesser oder, dass die Drähte jeweils Corde aus einer Mehrzahl von Einzeldrähten aus Stahl mit gleichem Durchmesser sind. Im letzteren Fall kann ferner vorgesehen sein, dass die Einzeldrähte miteinander vertwistet sind, wobei durch die Abstände bzw. Lage der Einzeldrähte zueinander eine dreidimensionale Mikrowelligkeit gebildet ist. Hierdurch läßt sich die Dehnungsfähigkeit der Drähte in Umfangsrichtung beim Bombieren noch besser einstellen, da die Längenänderung beim Bombieren durch das Enttwisten und durch das gleichzeitige Strecken des Gesamtdrahtes mit einhergehendem Wellenverlust noch leichter und sanfter geschieht.

Entsprechend kann bei alternativen Verfahren zur Herstellung eines erfindungsgemäßen Fahrzeugreifens vorgesehen sein, dass die in einem Streifen aus elastomerem Material eingebetteten Drähte zur Bildung der Bandage auf einen auf einer Reifenaufbautrommel aufgespannten Gürtel aufgewickelt wird, oder, dass die in mehreren Streifen aus elastomerem Material eingebetteten Drähte zur Bildung der Bandage auf einer Reifenaufbautrommel aufgespannten Gürtel aufgewickelt werden, wobei sich die Drähte in wenigstens zwei, insbesondere drei Streifen hinsichtlich ihrer Wellenamplitude unterscheiden.

Die Bandage mit Drähten unterschiedlicher Wellen-Amplituden kann also als einziger Streifen vorkonfektioniert werden, oder es können mehrere Streifen vorkonfektioniert werden, die jeweils Drähte gleicher Wellen-Amplituden aufweisen.

Gemäß einem besonders bevorzugten Verfahren zur Herstellung eines erfindungsgemäßen Fahrzeugreifens ist vorgesehen, dass die in einem Streifen aus elastomerem Material eingebetteten Drähte mit jeweils gleicher Wellen-Amplitude zur Bildung der Bandage als Spirale auf einen auf einer Reifenaufbautrommel aufgespannten Reifenrohling mit Radialkarkasse und Gürtel aufgespult werden, wobei der Streifen zwischen 1 und 15 parallel nebeneinander angeordnete Drähte enthält, wobei eine beim Aufspulen am Streifen anliegende Vorspannung während des Aufspulens derart variiert wird, dass sich in den Kantenbereichen, in den Zwischenbereichen und dem Mittenbereich unterschiedliche Wellenamplituden ergeben. Hier wird also ein gummierter Streifen, welcher beispielsweise ein bis fünfzehn Drähte gleicher Wellen-Amplitude enthält und eine Breite von etwa 10 mm aufweist unter Spannung auf den Reifenrohling aufgespult, beginnend an einem Kantenbereich des Gürtels, wobei der Streifen kontinuierlich in axialer Richtung des Reifens bis zum anderen Kantenbereich des Gürtels verfahren wird - jedenfalls für den Fall, dass nur ein Spulkopf zum Aufspulen des Streifens verwendet wird. Bei Verwendung von zwei Spulköpfen werden entsprechend zwei Streifen jeweils von axial innen nach axial außen aufgespult. Während des Aufspulens und axialen Verfahrens des Streifens wird an diesen eine variierende Zugspannung angelegt, so dass der Streifen mit unterschiedlicher bzw. sich verändernder Kraft gestreckt wird. Das Strecken wirkt sich dabei auf die Wellen-Amplitude aus, so dass sich hierdurch im Kantenbereich, im Zwischenbereich und im Mittenbereich der Bandage unterschiedliche Wellen-Amplituden ergeben. Gemäß einer praktischen Weiterbildung dieses Verfahrens kann vorgesehen sein, dass die Steigung der Spirale zumindest im Zwischenbereich und im Mittenbereich 0,5 - 4 Streifenbreiten je Reifenumfang beträgt. Dies entspricht etwa einem Winkel zur Umfangsrichtung zwischen fast 0° und 10°.

Vorteilhafte Weiterbildungen der Erfindung sehen vor, dass zwischen Radialkarkasse und einer unteren Cordlage des Gürtels im Bereich der Außenkanten der Cordlage ein in Umfangsrichtung des Fahrzeugluftreifens verlaufender Gummistreifen angeordnet ist, durch welchen einen Puffer zwischen Radialkarkasse und dem äußeren Kantenbereich der Bandage entsteht, wobei weiter vorgesehen sein kann, dass der Gummistreifen aus Gürtelgummierungsmaterial besteht. Hierunter versteht der Fachmann eine übliche und gebräuchliche Kautschukmischung, die sonst zum Gummieren der Gürtelcorde verwendet wird.

Durch die Verwendung eines derartigen zusätzlichen Gummistreifens auf der Karkasse im Bereich der Gürtelkanten lässt sich auf überraschend einfache Art und Weise vermeiden, dass die Bandage in ihren Kantenbereichen die Karkasse bzw. deren Festigkeitsträger verletzten könnte. Denn insbesondere wenn die Bandage breiter als der Gürtel ist, könnte die Karkasse im Extremfall durch die Bandage verletzt werden, was unter allen Umständen vermieden werden muss. Ein einfacher auf die Karkasse aufdublierter Gummistreifen schafft hier Abhilfe. Insbesondere, wenn der Gummistreifen aus einem Gürtelgummierungsmaterial besteht, also aus einer Gürtelmischung, in die normalerweise die Cordfäden des Gürtels eingebettet werden, findet auf überraschend einfache Art und Weise eine Schutz der Karkasse vor Beschädigungen statt, der leicht und sehr preiswert auszuführen ist.

In einer weiteren vorteilhaften Ausgestaltung kann hierbei noch vorgesehen sein, dass zwischen der unteren Cordlage des Gürtels und der oberen Cordlage des Gürtels ein in Umfangsrichtung des Fahrzeugluftreifens verlaufender Gummistreifen angeordnet ist, durch welchen ein Puffer zwischen den beiden Cordlagen und dem Kantenbereich der Bandage ersteht. Hier wird also ein üblicher Gürtelkantenschutzstreifen länger als üblich ausgestaltet, und zwar so, dass dieser auch einen Abstand zwischen Bandage und Gürtelkante gewährleistet, so dass sich Gürtelkanten und Bandage nicht berühren können.

Gemäß einer anderen vorteilhaften Ausgestaltung der Erfindung ist vorgesehen, dass die Seitenwände des Fahrzeugluftreifens nach axial innen jeweils durch eine ringförmige Einlage aus Elastomermaterial mit im wesentlichen sichelförmigen Profil verstärkt sind, wobei das Material der Einlage eine E-Modul von 8-15 MPa aufweist. Derartige Einlagen sind an sich bekannt, beispielsweise durch die AT 3 86 569 B oder die US 4 067 374, welche jeweils notlaufgeeignete Fahrzeugluftreifen betreffen. Die sichelförmige Einlage verstärkt die Seitenwand des Fahrzeugluftreifens derart, dass dieser auch zumindest über eine Strecke von etwa 160 - 200 km bei einer Geschwindigkeit von 80 Stundenkilometer ohne Luftfüllung gefahren werden kann. Die Kombination eines derartigen, an sich bekannten Reifens, welcher auch als "self-supporting-tire" oder "flat-run-tire" bekannt ist, mit der oben beschriebenen Bandage hat bei praktisch durchgeführten Versuchen überraschender Weise ergeben, dass die Haltbarkeit eines derartigen Reifens im Notlaufzustand gegenüber bislang bekannten Notlaufreifen deutlich höher ausfiel.

In einer weiteren vorteilhaften Ausgestaltung der Erfindung ist schließlich vorgesehen, dass Festigkeitsträger der Radialkarkasse durch Stahlfilamente oder Stahlcorde gebildet sind. Auch diese Maßnahme zeigte, insbesondere wenn ein zuvor beschriebener notlaufgeeigneter Reifen mit einer Stahlcordkarkasse versehen wurde, deutlich bessere Haltbarkeiten und Komforteigenschaften hinsichtlich des Fahrens bei Hochgeschwindigkeiten wie auch im Notlaufzustand.

Weitere Vorteile und Einzelheiten werden nachfolgend anhand eines Ausführungsbeispiels sowie in den Patentansprüchen näher beschrieben.

In der Zeichnung zeigt:
- Fig. 1: ein erstes Ausführungsbeispiel eines erfindungsgemäßen Fahrzeugluftreifens im Radialschnitt,
- Fig. 2: ein erstes Ausführungsbeispiel einer Bandage eines Gürtels eines erfindungsgemäßen Fahrzeugluftreifens in Draufsicht,
- Fig. 3: ein zweites Ausführungsbeispiel einer Bandage eines Gürtels eines erfindungsgemäßen Fahrzeugluftreifens in Draufsicht,
- Fig. 4 bis Fig. 11: weitere Ausführungsbeispiele von erfindungsgemäßen Fahrzeugluftreifen in Radialschnitt in schematischer Darstellung
- Fig. 12: ein Draht einer Bandage aus Fig. 2 in vergrößertem Maßstab

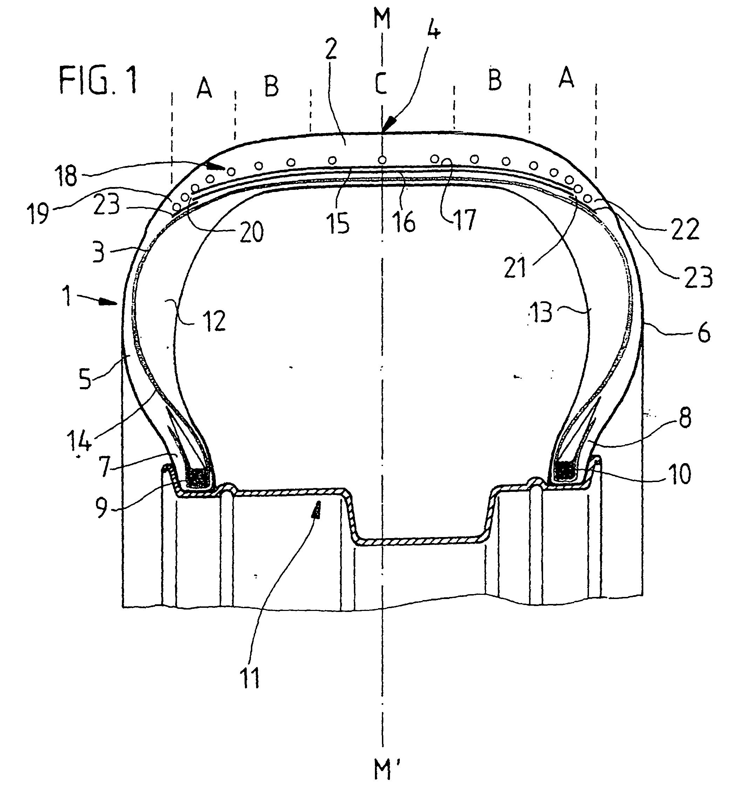

In Fig. 1 ist ein erstes Ausführungsbeispiel eines erfindungsgemäßen Fahrzeugluftreifens 1 in Radialschnitt dargestellt. Der Fahrzeugluftreifen 1 weist einen Laufstreifen 2 und eine Radialkarkasse 3 auf, welcher sich von einem Scheitelbereich 4 über zwei Seitenwandteile 5, 6 oder Seitenwände nach radial innen erstreckt und in Wülsten 7, 8 verankert ist. In den Wülsten 7, 8 ist jeweils ein zugfester Kern 9, 10 eingebettet, welcher jeweils einen festen Klemmsitz an einer Felge 11 gewährleistet. Die Seitenwände 5, 6 sind nach axial innen jeweils mit einer ringförmigen Einlage 12, 13 mit im wesentlichen sichelförmigen Profil verstärkt. Die Einlagen 12, 13 dienen der Versteifung der Seitenwände 5, 6 im Notlauffalle, d.h. also wenn der Fahrzeugluftreifen nahezu oder vollständig ohne Fülldruck ist. Im gezeigten Ausführungsbeispiel sind Festigkeitsträger 14 der Radialkarkasse 3 Stahlcorde, es können aber auch textile Corde verwendet werden.

Zwischen Laufstreifen 2 und Radialkarkasse 3 ist ein Gürtel 15 mit einer unteren Cordlage 16 und einer oberen Cordlage 17 angeordnet. Der Gürtel 15 wird durch eine Bandage 18 vollständig abgedeckt. Die Bandage 18 besteht aus einer Vielzahl metallischer Drähte 19 aus Stahl. Dabei weisen die Drähte 19 der Bandage unterschiedliche Abstände zueinander auf, und zwar jeweils in Bereichen links bzw. rechts der Äquatorial-oder Mittenlinie M-M', welche durch den Scheitelbereich 4 läuft. In einem Kantenbereich A weisen die parallel zueinander angeordneten Drähte 19 den geringsten Abstand zueinander auf. In diesem Bereich A überdeckt die Bandage 18 Gürtelkanten 20, 21, wobei ein äußerer Kantenbereich 22 der Bandage 18 über einem zusätzlichen Gummistreifen 23 angeordnet ist. Durch den Gummistreifen 23 wird ein Puffer zwischen Radialkarkasse 3 und dem äußeren Kantenbereich 22 der Bandage 18 geschaffen.

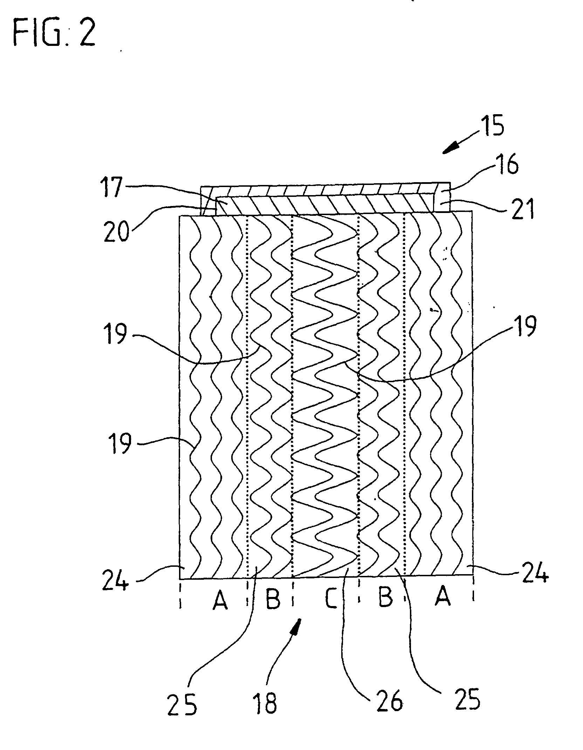

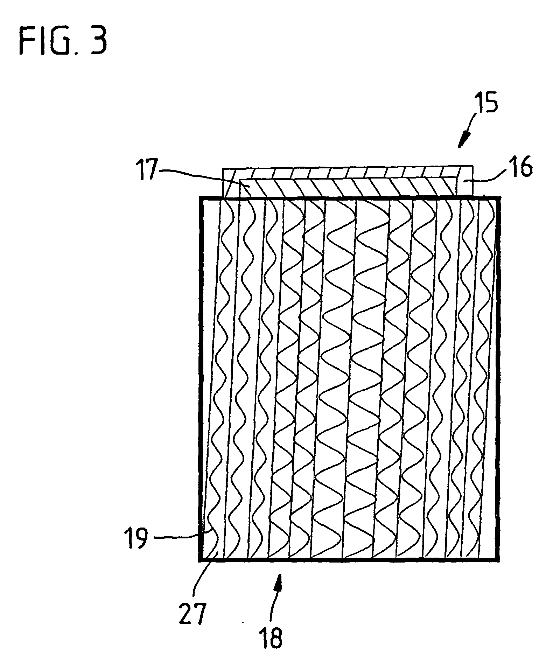

In den Figuren 2 und 3 sind zwei Ausführungsbeispiele der Bandage 18 in Draufsicht dargestellt, und zwar in einem Stadium, bei dem die Bandage 18 gerade auf den Gürtel 15 mit seiner unteren Cordlage 16 und seiner oberen Cordlage 17 aufgelegt wurde. Die Bandage 18 nach Fig. 2 besteht aus drei unterschiedlichen Streifen 24, 25, 26, wobei der in Fig. 2 äußerste linke bzw. äußerste rechte Streifen 24 den Kantenbereich A der Bandage bildet und die Gürtelkanten 20, 21 des Gürtels 15 abdeckt, während der Streifen 25 den Zwischenbereich B der Bandage 18 bildet und der Streifen 26 den Mittenbereich der Bandage 15 darstellt. Die Drähte 19 der Streifen 24 bis 26 weisen jeweils unterschiedliche Welligkeiten auf, wobei die Drähte 19 des Streifens 26 des Mittenbereich C die größte Amplitude aufweisen, da in diesem Bereich die größte Dehnung während des Bombierens stattfindet. Die Welligkeiten sorgen hier dafür, dass sich die Drähte 19 während des Bombierens strecken können, ohne dass die Drähte 19 gedehnt werden, wodurch die Gefahr bestünde, dass die Drähte reißen bzw. Einschnürungen im Gürtel hervorrufen. Nach erfolgter Bombierung/Vulkanisation weisen die Drähte 19 der Streifen 24 bis 26 keine Welligkeit oder nur noch eine geringe Restwelligkeit auf. Die Anzahl von Drähten 19 in einem Streifen 24, 25, 26 mit 10 mm Breite kann von 2-15 variieren. Es ist aber auch möglich, was in Fig. 2 nicht dargestellt ist, die Bandage aus einem einzigen Streifen vorzukonfektionieren, hierbei wäre die in Fig. 2 dargestellten Drähte mit unterschiedlicher Welligkeit in einem Streifen aus Gummimaterial eingelagert.

Fig. 3 zeigt eine alternative Ausgestaltung der Bandage 18, ebenfalls im Zustand nach Aufbringung der Bandage auf den Gürtel 15 und vor dem Bombieren. Bei der in Fig. 3 dargestellten Ausführungsform wird ein einziger Streifen 27 kontinuierlich auf den Reifenrohling aufgespult, wobei die Welligkeit des Drahtes 19 im Streifen 27 auf den Reifenzenit bzw. Mittenbereich C ausgelegt ist. Um die verschiedenen Wellenamplituden im Kanten-, Zwischen- und Mittenbereich zu erhalten, wird der Streifen 27 mit einer bestimmten Vorspannung von ca. 15 N beim Aufspulen auf den Reifenrohling aufgespult. Im Mittenbereich wird keine oder nur eine geringe Vorspannung an den Streifen 27 angelegt; die Vorspannung ist am größten im Kantenbereich der Bandage 18.

Je nach Art des Aufspulens der Bandage ergeben sich verschiedene Winkel der Bandage zur Umfangsrichtung des Reifens, beispielsweise Winkel von 0° bis etwa 10°.

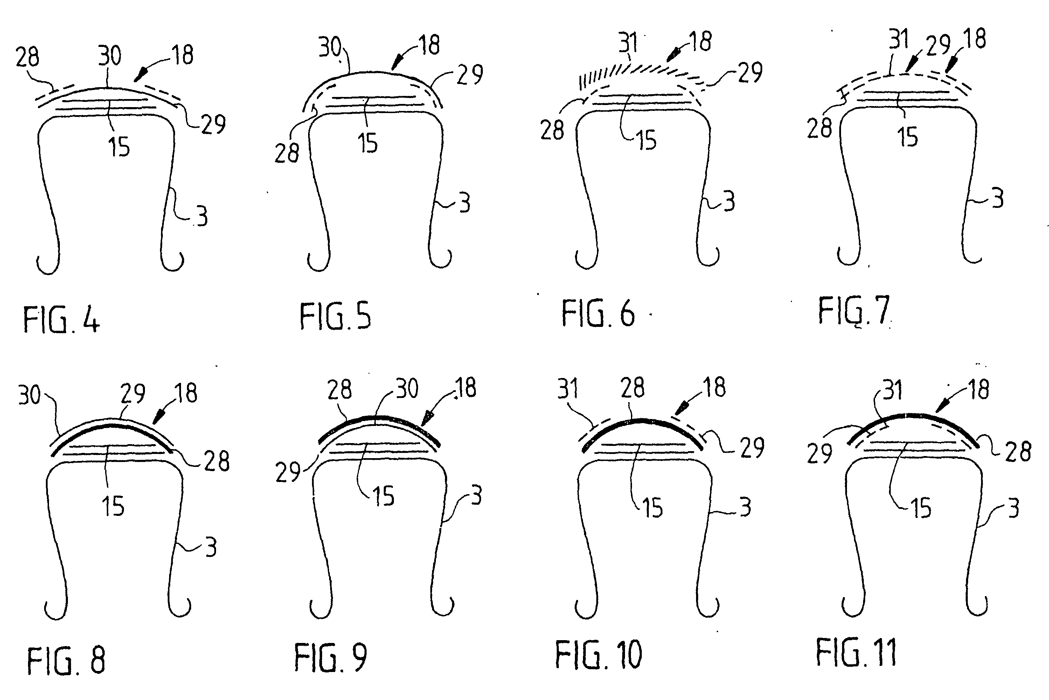

In den Figuren 4 bis 11 sind verschiedene Ausführungsformen der erfindungsgemäßen Bandage 18 in schematischer Darstellung gezeigt, wobei in den Figuren 4 bis 11 jeweils eine Radialkarkasse 3 schematisch im Radialschnitt angedeutet ist, über der ein Gürtel 15 und die Bandage 18 angeordnet ist. Die Bandage 18 gemäß den Figuren 4 bis 11 besteht jeweils aus zwei Lagen 28, 29, wobei die Lage 28 jeweils aus in Gummi gebetteten Drähten 19 aus Stahl mit Wellen-Amplituden aufgebaut und die Lage 29 jeweils aus in Gummi gebetteten textilen Festigkeitsträgern besteht, welche ebenfalls gewellt sein können.

Fig. 4 zeigt einen Aufbau der Bandage 18 mit der Lage 29 als textiler Vollbandage 30, welche den Gürtel direkt abdeckt bzw. direkt über dem Gürtel 15 angeordnet ist, während die Lage 28 aus Streifen 24, welche über der textilen Vollbandage 30 angeordnet ist, nur den Kantenbereich A abdeckt.

Fig. 5 zeigt den umgekehrten Fall, dass nämlich die Lage 28 aus metallischen Festigkeitsträgern im Kantenbereich des Gürtels angeordnet ist, während die textile Vollbandage 30 über der Lage 28 angeordnet ist.

Fig. 6 zeigt einen ähnlichen Aufbau entsprechend Fig. 5. Hier besteht jedoch die Lage 29 aus einer textilen Spulbandage 31. Die in Fig. 7 dargestellte Ausführungsform ist der in Fig. 4 dargestellten ähnlich, wobei auch hier eine textile Spulbandage 31 Verwendung findet.

In den Figuren 8 und 9 sind Ausführungsformen dargestellt, bei denen die Bandage 18 aus zwei Lagen 28 , 29 besteht, die jeweils als Vollbandage ausgebildet sind, einmal als Bandage 28 mit gewellten Drähten und einmal als textile Vollbandage 30, wobei gemäß Fig. 8 die Lage 28 direkt über dem Gürtel angeordnet ist und wobei bei Fig. 9 die Lage 29 dem Gürtel 15 direkt abdeckt.

In den Figuren 10 und 11 sind Ausführungsformen dargestellt, bei dem die Lage 28 als Vollbandage mit gewellten Stahldrähten ausgebildet ist, während die Lage 29 als textile Spulbandage 31 ausgebildet ist, wobei diese jeweils nur als Kantenbandage ausgebildet ist und einmal (Fig. 11) direkt den Gürtel abdeckt und einmal (Fig. 10) über der Lage 28 aus gewählten Stahldrähten angeordnet ist.

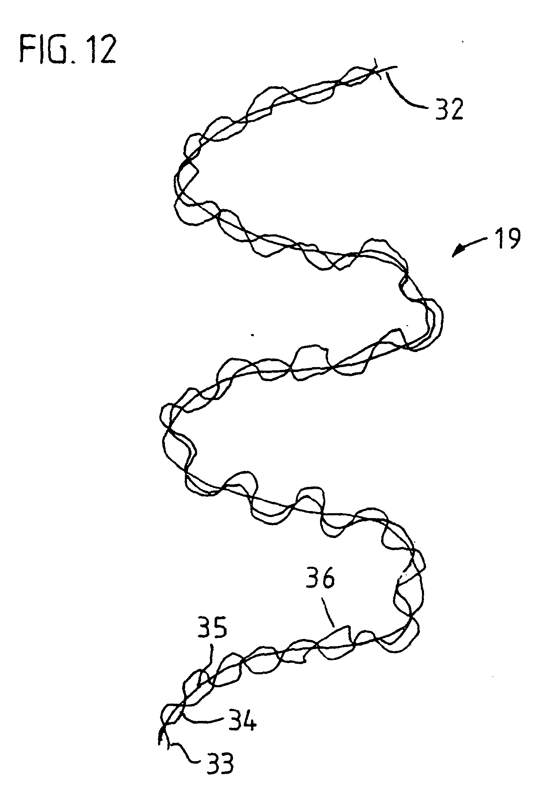

In Fig. 12 ist ein Draht 19 der Bandage aus den Fig. 2 und 3 in stark vergrößertem Maßstab dargestellt. Bei dem in Fig. 12 dargestellten Draht 19 handelt es sich um einen Cord 32, welcher aus drei Einzeldrähten 33,34,35 besteht. Diese sind miteinander vertwistet (verdrillt), wobei die Art der Vertwistung relativ locker ist, so dass sich dreidimensionale Mikro-Wellen 36 bilden. Diese werden beim Bombieren gestreckt, so dass dann der Draht 19 entwistet wird.

### Bezugszeichenliste

### (ist Teil der Beschreibung)

- 1: Fahrzeugluftreifen
- 2: Laufstreifen
- 3: Radialkarkasse
- 4: Scheitelbereich
- 5: Seitenwandteile
- 6: Seitenwandteile
- 7: Wulst
- 8: Kern
- 9: Kern
- 10: Kern
- 11: Felge
- 12: Einlage
- 13: Einlage
- 14: Festigkeitsträger
- 15: Gürtel
- 16: untere Cordlage
- 17: obere Cordlage
- 18: Bandage
- 19: Draht
- 20: Gürtelkante
- 21: Gürtelkante
- 22: äußerer Kantenbereich
- 23: Gummistreifen
- 24: Streifen
- 25: Streifen
- 26: Streifen
- 27: Streifen
- 28: Lage
- 29: Lage
- 30: textile Vollbandage
- 31: textile Spulbandage
- 32: Cord
- 33: Einzeldraht
- 34: Einzeldraht
- 35: Einzeldraht
- 36: Mikro-Welle

- M-M': Mittellinie
- A: Kantenbereich
- B: Zwischenbereich
- C: Mittenbereich

## Patentansprüche

1. Fahrzeugluftreifen (1) mit einem Laufstreifen (2), einer Radialkarkasse (3), die sich vom Scheitelbereich über zwei Seitenwandteile (5,6) nach radial innen erstreckt und in Wülsten (7,8) verankert ist, und einem Gürtel (15) aus wenigstens zwei Cordlagen (16,17), welcher zwischen dem Laufstreifen (2) und dem Scheitelbereich der Radialkarkasse (3) eingebettet ist, und mit einer den Gürtel (15) verstärkenden, im wesentlichen in Umfangsrichtung des Fahrzeugluftreifens (1) verlaufenden Bandage (18), welche zumindest teilweise aus in Gummi eingebetteten metallischen Drähten (19) besteht, welche über dem Gürtel (15) angeordnet sind und zumindest vor der Vulkanisation des Fahrzeugluftreifens (1) jeweils einen wellenförmigen Verlauf aufweisen, **dadurch gekennzeichnet, dass** die Bandage (18) zumindest eine obere Cordlage (17) des Gürtels (15) vollständig abdeckt und dass die Drähte (19) der Bandage (18) vor der Vulkanisation in einem Kantenbereich (A), in einem Mittenbereich (C) und in einem zwischen Kantenbereich (A) und Mittenbereich (C) liegenden Zwischenbereich (B) unterschiedliche Wellen-Amplituden aufweisen, wobei die Wellen-Amplitude im Mittenbereich (C) größer ist als die Wellen-Amplitude im Zwischenbereich (B) und wobei die Wellen-Amplitude im Kantenbereich (A) kleiner ist als die Wellen-Amplitude im Zwischenbereich (B).

2. Fahrzeugluftreifen nach Anspruch 1, **dadurch gekennzeichnet, dass** die Bandage (18) aus zwei Lagen (28, 29) besteht, wobei wenigstens eine Lage (28; 29) den Gürtel (15) vollständig überdeckt und wobei wenigstens eine Lage (28) aus in Gummi eingebetteten metallischen Drähten (19) besteht, welche zumindest vor der Vulkanisation des Fahrzeugluftreifens (1) jeweils einen wellenförmigen Verlauf aufweisen und dass eine Lage (29) der Bandage (18) aus organischen Festigkeitsträgern, wie Corden aus Aramid, Rayon, Polyester oder Nylon oder deren Mischungen, besteht.

3. Fahrzeugluftreifen nach Anspruch 1 oder 2, **dadurch gekennzeichnet, dass** die Drähte (19) der Bandage (18) vor dem Auflegen auf den Gürtel (15) in wenigstens einen Streifen (24;25;26;27) aus elastomeren Material eingebettet sind, welcher eine Breite von 4 bis 15, vorzugsweise 10 mm aufweist.

4. Fahrzeugluftreifen nach Anspruch 3, **dadurch gekennzeichnet, dass** ein Streifen (24;25;26) jeweils wenigstens einen Draht (19) jeweils des Kantenbereichs (A), des Zwischenbereichs (B), oder des Mittenbereichs (C) enthält.

5. Fahrzeugluftreifen nach wenigstens einem der Ansprüche 1 - 4, **dadurch gekennzeichnet, dass** die Drähte (19) jeweils Einzeldrähte aus Stahl oder aus einer Stahllegierung mit gleichem Durchmesser sind.

6. Fahrzeugluftreifen nach wenigstens einem der Ansprüche 1 - 4, **dadurch gekennzeichnet, dass** die Drähte (19) jeweils Corde (32) aus einer Mehrzahl von Einzeldrähten (33,34,35) aus Stahl oder aus einer Stahllegierung mit gleichem Durchmesser sind.

7. Fahrzeugluftreifen nach wenigstens einem der Ansprüche 1 - 4, **dadurch gekennzeichnet, dass** die Drähte (19) jeweils Corde (32) aus einer Mehrzahl von Einzeldrähten (33,34,35) aus Stahl mit unterschiedlichem Durchmesser sind.

8. Fahrzeugluftreifen nach Anspruch 6 oder 7, **dadurch gekennzeichnet, dass** die Einzeldrähte (33,34,35) miteinander vertwistet sind, wobei durch die Abstände bzw. Lage der Einzeldrähte (33,34,35) zueinander eine dreidimensionale Mikrowelligkeit gebildet ist.

9. Fahrzeugluftreifen nach wenigstens einem der Ansprüche 1 - 8, **dadurch gekennzeichnet, dass** die Drähte (19) sich hinsichtlich des Durchmessers jeweils im Kantenbereich (A), im Zwischenbereich (B) und im Mittenbereich (C) unterscheiden.

10. Fahrzeugluftreifen nach Anspruch 2, **dadurch gekennzeichnet, dass** die Lage (29) der Bandage (18) aus organischen Festigkeitsträgern aus 1-fach Gewebe, insbesondere 1400/1-110 epdm besteht.

11. Fahrzeugluftreifen nach wenigstens einem der Ansprüche 2 - 10, **dadurch gekennzeichnet, dass** eine Lage (28;29) der Bandage (18) jeweils nur den Kantenbereich (21;22) des Gürtels (15) überdeckt, während die andere Lage (28;29) den Gürtel (15) vollständig überdeckt.

12. Fahrzeugluftreifen nach wenigstens einem der Ansprüche 2 - 10, **dadurch gekennzeichnet, dass** beide Lagen (28,29) der Bandage (18) den Gürtel (15) vollständig überdecken.

13. Fahrzeugluftreifen nach wenigstens einem der Ansprüche 2, 11 oder 12, **dadurch gekennzeichnet, dass** die Lage (29) aus organischen Festigkeitsträgern eine textile Vollbandage (30) ist.

14. Fahrzeugluftreifen nach wenigstens einem der Ansprüche 2, 11 oder 13, **dadurch gekennzeichnet, dass** die Lage (29) aus organischen Festigkeitsträgern eine textile Spulbandage (31) ist.

15. Fahrzeugluftreifen nach einem der Ansprüche 1 - 14, **dadurch gekennzeichnet, dass** zwischen Radialkarkasse (3) und einer unteren Cordlage (16) des Gürtels (15) im Bereich der Außenkanten (21) der Cordlage (16) ein in Umfangsrichtung des Fahrzeugluftreifens (1) verlaufender Gummistreifen (23) angeordnet ist, durch welchen ein Puffer zwischen Radialkarkasse (3) und dem äußeren Kantenbereich (22) der Bandage (18) entsteht.

16. Fahrzeugluftreifen nach Anspruch 15, **dadurch gekennzeichnet, dass** der Gummistreifen (23) aus Gürtelgummierungsmaterial besteht.

17. Fahrzeugluftreifen nach einem der Ansprüche 1 bis 16, **dadurch gekennzeichnet, dass** zwischen der unteren Cordlage (16) des Gürtels (15) und der oberen Cordlage (17) des Gürtels (15) ein in Umfangsrichtung des Fahrzeugluftreifens (1) verlaufender Gummistreifen angeordnet ist, durch welchen ein Puffer zwischen den beiden Cordlagen (16,17) und dem Kantenbereich (A) der Bandage (18) entsteht.

18. Fahrzeugluftreifen nach einem der Ansprüche 1 bis 17, **dadurch gekennzeichnet, dass** die Seitenwände (5,6) des Fahrzeugluftreifens (1) nach axial innen jeweils durch eine ringförmige Einlage (12,13) aus Elastomermatarial mit im wesentlichen sichelförmigen Profil verstärkt sind, wobei das Material der Einlage (12,13) ein E-Modul von 8 - 15 MPa aufweist.

19. Fahrzeugluftreifen nach einem der Ansprüche 1 bis 18, **dadurch gekennzeichnet, dass** Festigkeitsträger (14) der Radialkarkasse (3) durch Stahlfilamente oder Stahlcorde gebildet sind.

20. Verfahren zur Herstellung eines Fahrzeugreifens nach wenigstens einem der Ansprüche 1 - 19, **dadurch gekennzeichnet, dass** die in einem Streifen aus elastomeren Material eingebetteten Drähte (19) zur Bildung der Bandage (18) auf einen auf einer Reifenaufbautrommel aufgespannten Gürtel (15) aufgewickelt wird.

21. Verfahren zur Herstellung eines Fahrzeugreifens nach wenigstens einem der Ansprüche 1 - 19, **dadurch gekennzeichnet, dass** die in mehreren Streifen (24,25,26) aus elastomeren Material eingebetteten Drähte (19) zur Bildung der Bandage (18) auf einen auf einer Reifenaufbautrommel Gürtel (15) aufgewickelt werden, wobei sich die Drähte (19) in wenigstens zwei, insbesondere drei Bereichen (A,B,C) hinsichtlich ihrer Wellen-Amplitude unterscheiden.

22. Verfahren zur Herstellung eines Fahrzeugreifens nach wenigstens einem der Ansprüche 1 - 19, **dadurch gekennzeichnet, dass** die in einem Streifen (27) aus elastomeren Material eingebetteten Drähte (19) mit jeweils gleicher Wellen-Amplitude zur Bildung der Bandage (18) als Spirale auf einen auf einer Reifenaufbautrommel aufgespannten Reifenrohling mit Radialkarkasse(3) und Gürtel (15) aufgespult werden, wobei der Streifen (27) zwischen 1 und 15 parallel nebeneinander angeordnete Drähte (19) enthält, wobei eine beim Aufpulen am Streifen anliegende Vorspannung während des Aufspulens derart variiert wird, dass sich in den Kantenbereichen (A), in den Zwischenbereichen (B) und dem Mittenbereich (C) unterschiedliche Wellen-Amplituden ergeben.

23. Verfahren zur Herstellung eines Fahrzeugreifens nach Anspruch 20, **dadurch gekennzeichnet, dass** die Steigung der Spirale zumindest im Zwischenbereich (B) und im Mittenbereich (C) etwa eine Streifenbreite je Reifenumfang beträgt.

## Claims

1. Pneumatic vehicle tyre (1) with a tread rubber (2), a radial ply casing (3), which extends from the apex region over two sidewall parts (5, 6) radially inwards and is anchored in beads (7, 8), and a breaker belt (15) comprising at least two layers of cord fabric (16, 17), which is embedded between the tread rubber (2) and the apex region of the radial ply casing (3), and with a bandage (18), which reinforces the breaker belt (15), runs essentially in the circumferential direction of the pneumatic vehicle tyre (1) and comprises at least partly metallic wires (19) which are embedded in rubber, are arranged over the breaker belt (15) and have in each case a waveform profile, at least prior to the vulcanization of the pneumatic vehicle tyre (1), **characterized in that** the bandage (18) completely covers at least an upper layer of cord fabric (17) of the breaker belt (15) and **in that** the wires (19) of the bandage (18) have, prior to the vulcanization, different wave amplitudes in an edge region (A), in a central region (C) and in an intermediate region (B) lying between the edge region (A) and the central region (C), the wave amplitude in the central region (C) being greater than the wave amplitude in the intermediate region (B) and the wave amplitude in the edge region (A) being less than the wave amplitude in the intermediate region (B).

2. Pneumatic vehicle tyre according to Claim 1, **characterized in that** the bandage (18) comprises two plies (28, 29), at least one ply (28; 29) completely covering the breaker belt (15) and at least one ply (28) comprising metal wires (19) embedded in rubber, which have in each case a waveform profile, at least prior to the vulcanization of the pneumatic vehicle tyre (1), and **in that** one layer (29) of the bandage (18) comprises organic reinforcements, such as cords made of aramid, rayon, polyester or nylon or blends thereof.

3. Pneumatic vehicle tyre according to Claim 1 or 2, **characterized in that**, before being placed onto the breaker belt (15), the wires (19) of the bandage (18) are embedded in at least one strip (24; 25; 26; 27) of elastomeric material which has a width of 4 to 15, preferably 10 mm.

4. Pneumatic vehicle tyre according to Claim 3, **characterized in that** a strip (24; 25; 26) in each case contains at least one wire (19) respectively of the edge region (A), of the intermediate region (B), or of the central region (C).

5. Pneumatic vehicle tyre according to at least one of Claims 1-4, **characterized in that** the wires (19) are in each case individual wires made of steel or made of a steel alloy of the same diameter.

6. Pneumatic vehicle tyre according to at least one of Claims 1-4, **characterized in that** the wires (19) are in each case cords (32) comprising a multiplicity of individual wires (33, 34, 35) made of steel or made of a steel alloy of the same diameter.

7. Pneumatic vehicle tyre according to at least one of Claims 1-4, **characterized in that** the wires (19) are in each case cords (32) comprising a multiplicity of individual wires (33, 34, 35) made of steel of different diameters.

8. Pneumatic vehicle tyre according to Claim 6 or 7, **characterized in that** the individual wires (33, 34, 35) are twisted with one another, a three-dimensional microwaviness being formed by the spacings between or position of the individual wires (33, 34, 35) in relation to one another.

9. Pneumatic vehicle tyre according to at least one of Claims 1-8, **characterized in that** the wires (19) differ with regard to the diameter respectively in the edge region (A), in the intermediate region (B) and in the central region (C).

10. Pneumatic vehicle tyre according to Claim 2, **characterized in that** the ply (29) of the bandage (18) comprises organic reinforcements of single fabric, in particular 1400/1-110 epdm.

11. Pneumatic vehicle tyre according to at least one of Claims 2-10, **characterized in that** one ply (28; 29) of the bandage (18) in each case covers only the edge region (21; 22) of the breaker belt (15), while the other ply (28; 29) completely covers the breaker belt (15).

12. Pneumatic vehicle tyre according to at least one of Claims 2-10, **characterized in that** both plies (28, 29) of the bandage (18) completely cover the breaker belt (15).

13. Pneumatic vehicle tyre according to at least one of Claims 2, 11 or 12, **characterized in that** the ply (29) comprising organic reinforcements is a solid textile bandage (30).

14. Pneumatic vehicle tyre according to at least one of Claims 2, 11 or 13, **characterized in that** the ply (29) comprising organic reinforcements is a wound textile bandage (31).

15. Pneumatic vehicle tyre according to one of Claims 1-14, **characterized in that** arranged between the radial ply casing (3) and a lower layer of cord fabric (16) of the breaker belt (15) in the region of the outer edges (21) of the layer of cord fabric (16) is a rubber strip (23) running in the circumferential direction of the pneumatic vehicle tyre (1), by which a buffer is created between the radial ply casing (3) and the outer edge region (22) of the bandage (18).

16. Pneumatic vehicle tyre according to Claim 15, **characterized in that** the rubber strip (23) consists of breaker belt rubberization material.

17. Pneumatic vehicle tyre according to one of Claims 1 to 16, **characterized in that** arranged between the lower layer of cord fabric (16) of the breaker belt (15) and the upper layer of cord fabric (17) of the breaker belt (15) is a rubber strip running in the circumferential direction of the pneumatic vehicle tyre (1), by which a buffer is created between the two layers of cord fabric (16, 17) and the edge region (A) of the bandage (18).

18. Pneumatic vehicle tyre according to one of Claims 1 to 17, **characterized in that** the sidewalls (5, 6) of the pneumatic vehicle tyre (1) are in each case reinforced axially inwards by an annular insert (12, 13) of elastomer material with an essentially sickle-shaped profile, the material of the insert (12, 13) having a modulus of elasticity of 8-15 MPa.

19. Pneumatic vehicle tyre according to one of Claims 1 to 18, **characterized in that** reinforcements (14) of the radial ply casing (3) are formed by steel filaments or steel cords.

20. Method for producing a vehicle tyre according to at least one of Claims 1-19, **characterized in that** the wires (19) embedded in a strip of elastomeric material for forming the bandage (18) are wound up onto a breaker belt (15) mounted on a tyre building drum.

21. Method for producing a vehicle tyre according to at least one of Claims 1-19, **characterized in that** the wires (19) embedded in a number of strips (24, 25, 26) of elastomeric material for forming the bandage (18) are wound up onto a breaker belt (15) mounted on a tyre building drum, the wires (19) in at least two, in particular three, regions (A, B, C) differing with regard to their wave amplitude.

22. Method for producing a vehicle tyre according to at least one of Claims 1-19, **characterized in that** the wires (19) embedded in a strip (27) of elastomeric material are wound up as a spiral onto a tyre blank with a radial ply casing (3) and a breaker belt (15) mounted on a tyre building drum with the same wave amplitude in each case for forming the bandage (18), the strip (27) containing between 1 and 15 wires (19) arranged parallel next to one another, a prestress applied to the strip during the winding up being varied during the winding up in such a way that different wave amplitudes are obtained in the edge regions (A), in the intermediate regions (B) and in the central region (C).

23. Method for producing a vehicle tyre according to Claim 20, **characterized in that** the pitch of the spiral amounts to approximately one strip width for every circumference of the tyre, at least in the intermediate region (B) and in the central region (C).

## Revendications

1. Pneumatique (1) pour véhicule automobile, qui présente une bande de roulement (2), une carcasse radiale (3) qui, à partir de la région de son sommet, s'étend radialement vers l'intérieur sur deux parties (5, 6) de paroi latérale et est ancrée dans des talons (7, 8), qui présente une nappe d'armature (15) constituée d'au moins deux couches (16, 17) de fil et incorporée entre la bande de roulement (2) et la région du sommet de la carcasse radiale (3), qui présente un bandage (18) de renforcement de la nappe d'armature (15) qui s'étend essentiellement dans le sens de la périphérie du pneumatique (1) de véhicule et qui est au moins partiellement constitué de fils métalliques (19) qui sont incorporés dans du caoutchouc, qui sont agencés au-dessus de la nappe d'armature (15) et qui présentent chaque fois un parcours ondulé au moins avant la vulcanisation du pneumatique (1) de véhicule automobile, **caractérisé en ce que** le bandage (18) couvre totalement au moins une couche supérieure (17) de fil de la nappe d'armature (15) et **en ce qu'**avant la vulcanisation, les fils (19) du bandage (18) présentent des amplitudes d'ondulation différentes dans une région latérale (A), dans une région médiane (C) et dans une région intermédiaire (B) située entre la région latérale (A) et la région médiane (C), l'amplitude des ondulations dans la région médiane (C) étant plus grande que l'amplitude des ondulations dans la région intermédiaire (B) et l'amplitude des ondulations dans la région latérale (A) étant plus petite que l'amplitude des ondulations dans la région intermédiaire (B).

2. Pneumatique pour véhicule automobile selon la revendication 1, **caractérisé en ce que** le bandage (18) est constitué de deux couches (28, 29), au moins une couche (28; 29) recouvrant complètement la nappe d'armature (15) et au moins une couche (28) étant constituée de fils métalliques (19) qui sont incorporés dans du caoutchouc et qui présentent tous un parcours ondulé au moins avant la vulcanisation du pneumatique (1) pour véhicule automobile et **en ce qu'**une couche (29) du bandage (18) est constituée de renforts organiques, par exemple des fils en aramide, en rayonne, en polyester, en nylon ou en mélanges de ceux-ci.

3. Pneumatique pour véhicule automobile selon les revendications 1 ou 2, **caractérisé en ce qu'**avant d'être posés sur la nappe d'armature (15), les fils (19) du bandage (18) sont incorporés dans au moins une bande (24; 25; 26; 27) en matériau élastomère dont la largeur est comprise entre 4 et 15 mm et est de préférence de 10 mm.

4. Pneumatique pour véhicule automobile selon la revendication 3, **caractérisé en ce que** chaque bande (24; 25; 26) contient au moins un fil (19) de la région latérale (A), au moins un fil de la région intermédiaire (B) et au moins un fil de la région médiane (C).

5. Pneumatique pour véhicule automobile selon au moins l'une des revendications 1 à 4, **caractérisé en ce que** les fils (19) sont tous des fils distincts de même diamètre, en acier ou en un alliage d'acier.

6. Pneumatique pour véhicule automobile selon au moins l'une des revendications 1 à 4, **caractérisé en ce que** les fils (19) sont tous des fils (32) constitués de plusieurs fils distincts (33, 34, 35) de même diamètre, en acier ou en un alliage d'acier.

7. Pneumatique pour véhicule automobile selon au moins l'une des revendications 1 à 4, **caractérisé en ce que** les fils (19) sont tous des fils (32) constitués de plusieurs fils en acier distincts (33, 34, 35) de diamètres différents.

8. Pneumatique pour véhicule automobile selon les revendications 6 ou 7, **caractérisé en ce que** les fils distincts (33, 34, 35) sont torsadés ensemble, une micro-ondulation tridimensionnelle étant formée par les distances entre les fils distincts (33, 34, 35) et par leur position les uns par rapport aux autres.

9. Pneumatique pour véhicule automobile selon au moins l'une des revendications 1 à 8, **caractérisé en ce que** les fils (19) de la région latérale (A), de la région intermédiaire (B) et de la région médiane (C) ont chaque fois des diamètres différents.

10. Pneumatique pour véhicule automobile selon la revendication 2, **caractérisé en ce que** la couche (29) du bandage (18) est constituée de renforts organiques en tissu simple et en particulier en EPDM 1400/1-110.

11. Pneumatique pour véhicule automobile selon au moins l'une des revendications 2 à 10, **caractérisé en ce qu'**une couche (28; 29) du bandage (18) ne couvre chaque fois qu'une région latérale (21; 22) de la nappe d'armature (15) tandis que l'autre couche (28; 29) recouvre entièrement la nappe d'armature (15).

12. Pneumatique pour véhicule automobile selon au moins l'une des revendications 2 à 10, **caractérisé en ce que** les deux couches (28, 29) du bandage (18) recouvrent entièrement la nappe d'armature (15).

13. Pneumatique pour véhicule automobile selon au moins l'une des revendications 2, 11 ou 12, **caractérisé en ce que** la couche (29) de renfort organique est un large bandage textile (30) enroulé une fois.

14. Pneumatique pour véhicule automobile selon au moins l'une des revendications 2, 11 ou 13, **caractérisé en ce que** la couche (29) de renfort organique est un étroit bandage textile (31) enroulé en plusieurs fois.

15. Pneumatique pour véhicule automobile selon l'une des revendications 1 à 14, **caractérisé en ce que** dans la région du côté extérieur (21) de la couche (16) de fil, une bande de caoutchouc (23) qui s'étend dans le sens de la périphérie du pneumatique (1) pour véhicule automobile et qui crée un tampon entre la carcasse radiale (3) et la région latérale extérieure (22) du bandage (18) est agencée entre la carcasse radiale (3) et une couche inférieure (16) de fil de la nappe d'armature (15).

16. Pneumatique pour véhicule automobile selon la revendication 15, **caractérisé en ce que** la bande de caoutchouc (23) est constituée d'un matériau de caoutchoutage de la nappe d'armature.

17. Pneumatique pour véhicule automobile selon l'une des revendications 1 à 16, **caractérisé en ce qu'**une bande de caoutchouc qui s'étend dans le sens de la périphérie du pneumatique (1) pour véhicule automobile est agencée entre la couche inférieure (16) de fil de la nappe d'armature (15) et la couche supérieure (17) de fil de la nappe d'armature (15) et crée un tampon entre les deux couches de fil (16, 17) et la région latérale (A) du bandage (18).

18. Pneumatique pour véhicule automobile selon l'une des revendications 1 à 17, **caractérisé en ce que** les parois latérales (5, 6) du pneumatique (1) pour véhicule automobile sont toutes deux renforcées axialement vers l'intérieur par une garniture annulaire (12, 13) en matériau élastomère et au profil essentiellement en forme de faucille, le matériau des garnitures (12, 13) présentant un module E compris entre 8 et 15 MPa.

19. Pneumatique pour véhicule automobile selon l'une des revendications 1 à 18, **caractérisé en ce que** les renforts (14) de la carcasse radiale (3) sont constitués de filaments en acier ou de fils en acier.

20. Procédé de fabrication d'un pneumatique pour véhicule automobile selon au moins l'une des revendications 1 à 19, **caractérisé en ce qu'**afin de former le bandage (18), les fils (19) incorporés dans une bande en matériau élastomère sont enroulés sur une nappe d'armature (15) tendue sur un tambour de montage de pneumatique.

21. Procédé de fabrication d'un pneumatique pour véhicule automobile selon au moins l'une des revendications 1 à 19, **caractérisé en ce que** les fils (19) incorporés dans plusieurs bandes (24, 25, 26) en matériau élastomère et destinés à former le bandage (18) sont enroulés sur une nappe d'armature (15) qui est placée sur un tambour d'assemblage de pneu, les fils (19) présentant des amplitudes d'ondulation différentes dans au moins deux et en particulier dans trois régions (A, B, C).

22. Procédé de fabrication d'un pneumatique pour véhicule automobile selon au moins l'une des revendications 1 à 19, **caractérisé en ce qu'**afin de former le bandage (18), les fils (19) qui sont incorporés dans une bande (27) en matériau élastomère et qui ont tous la même amplitude d'ondulation sont enroulés en spirale sur une ébauche de pneu tendue sur un tambour de montage de pneu et dotée de la carcasse radiale (3) et de la nappe d'armature (15), la bande (27) contenant de 1 à 15 fils (19) agencés parallèlement les uns aux autres, une précontrainte appliquée sur la bande lors de l'enroulement variant, lors de celui-ci, de façon à obtenir différentes amplitudes d'ondulation dans les régions latérales (A), dans les régions intermédiaires (B) et dans la région médiane (C).

23. Procédé de fabrication d'un pneumatique pour véhicule automobile selon la revendication 20, **caractérisé en ce qu'**au moins dans la région intermédiaire (B) et dans la région médiane (C), la spirale croît d'à peu près une largeur de bande par tour de pneu.
